Europäisches Patentamt

(19) European Patent Office

Office européen des brevets

(11) Publication number: **0 259 290 B1**

(12) EUROPEAN PATENT SPECIFICATION

(45) Date of publication of patent specification: **17.06.92**   (51) Int. Cl.⁵: **B29B 7/88**, B29B 9/06, B29B 13/10, //B05D1/00, B29K27:00,B29K33:00

(21) Application number: **87870118.4**

(22) Date of filing: **26.08.87**

(54) **PVdF-based powder coatings.**

(30) Priority: **01.09.86 GB 8621109**

(43) Date of publication of application:
   **09.03.88 Bulletin 88/10**

(45) Publication of the grant of the patent:
   **17.06.92 Bulletin 92/25**

(84) Designated Contracting States:
   **AT BE CH DE ES FR GB GR IT LI LU NL SE**

(56) References cited:
   **US-A- 3 324 069**
   **US-A- 3 734 415**
   **US-A- 3 944 689**
   **US-A- 4 179 542**

(73) Proprietor: **FINA RESEARCH S.A.**
   **Zone Industrielle C**
   **B-6520 Seneffe (Feluy)(BE)**

(72) Inventor: **Sietses, Willem**
   **Eems 17**
   **NL-1423 CP Uithoorn(NL)**
   Inventor: **Plantenga, Tjalling Meinoud**
   **Maartenplein 3**
   **NL-3633 EJ Vreeland(NL)**
   Inventor: **Dekerk, Jean-Luc**
   **Avenue du Général Patton 187**
   **B-6700 Arlon(BE)**

(74) Representative: **Leyder, Francis et al**
   **c/o Fina Research S.A. Zone Industrielle C**
   **B-6520 Feluy (Feluy)(BE)**

Rank Xerox (UK) Business Services

EP 0 259 290 B1

**Description**

The present invention relates to a process for preparing pigmented powder coating products, based on poly(vinylidene fluoride) hereinafter referred to as PVdF, and to a process for coating a substrate with a pigmented PVdF coating. In particular, the present invention relates to a process for obtaining pigmented PVdF-based coatings without using solvents, more particularly for obtaining pigmented PVdF-based protective coatings.

PVdF-based coatings are known to be very useful as protective coatings for a variety of substrates due to the good chemical and weathering resistance and to the thermal stability of PVdF. The general known technique used for preparing them is to prepare a dispersion of PVdF in a suitable solvent for application by known means onto the required substrate which is thereafter subjected to a heat treatment.

The solvent used is generally known in the prior art as "latent solvent", and it is described therein as an organic solvent which has no significant action on PVdF at room temperature but which at an elevated temperature exerts a sufficient solvent action.

However, although the known systems may give good results, environmental protection laws throughout the world, but mainly in Europe and in the U.S.A., are making it increasingly difficult to handle solvent-based systems. Further, the recovery of the solvent is a costly procedure. Accordingly, there is a need in the art for solventless PVdF-based coatings.

It is also known in the prior art to obtain pigmented PVdF-based coatings from a mixture of powdered pigment and PVdF. However, such a mixture is hardly homogeneous. Further, the pigment is not perfectly wetted by the resin, and it is believed that the coatings obtained have no long term stability because of the presence of voids or empty spaces around the pigment particles. Also, the mechanical properties of such coatings are rather bad. Accordingly, there is a need in the art for an improved solventless process for obtaining pigmented PVdF coatings.

The present invention aims to provide pigmented PVdF-based powder coatings which are prepared without the use of any solvent.

It is an object of the present invention to provide pigmented PVdF-based powder coating products.

It is another object of the present invention to provide a process for preparing pigmented PVdF-based powder coating products without the use of solvents.

It is yet another object of the present invention to provide stable pigmented PVdF-based coatings without the use of solvents and the process for preparing them.

Accordingly the present invention provides a process for preparing pigmented PVdF-based powder coatings products, comprising the steps of :

(i) mixing PVdF resin with one or more compatible thermoplastic resins, and one or more pigments;

(ii) extruding and granulating the resulting mixture; and

(iii) cryogenically grinding the resulting pellets, and sieving out particles which are larger than a predetermined size.

The present invention further provides a process for coating a substrate with a pigmented PVdF-based coating, the process comprising the steps of :

(a) applying the pigmented PVdF-based powder on the substrate; and

(b) subjecting the coating to a heat treatment, preferably at a temperature of from 180 to 260°C.

According to a preferred embodiment of this invention, the pigmented PVdF-based powder is applied on a substrate which has been previously covered with a primer coating, such as an epoxy-type resin.

Embodiments of the invention will now be described by way of example only.

The term PVdF used herein refers not only to the homopolymer of vinylidene fluoride, but also to the copolymers prepared from at least 90% by weight of vinylidene fluoride monomers. Suitable copolymers include those with fluorinated comonomers, as for example tetrafluoroethylene, hexafluoropropane, vinylfluoride, and the like. However, the homopolymer is generally used.

The preferred PVdF resins are those having a molecular weight in the range of from 10 000 to 70 000, most preferably of from 30 000 to 50 000, a melting temperature of from 165 to 170°C, a melt flow index (according to ASTM D1238) of from 10 to 50 g/10 min, most preferably of from 10 to 30 g/10 min, and a melt viscosity (according to ASTM D 3835) of from 6 000 to 12 000 P at 230°C, most preferably of from 7 000 to 10 000 P. Coatings made from PVdF resins with molecular weights lower than about 10 000 do not have good mechanical properties. On the other hand, powders obtained with PVdF having a molecular weight greater than about 70 000 remain excessively viscous during the heat treatment.

The PVdF is mixed with one or several compatible thermoplastic resins. It has however been found that it is most advantageous to use a thermoplastic poly(methylmethacrylate) resin (hereinafter referred to as PMMA), which is therefore preferred. As the thermoplastic PMMA resin, there may be used a thermoplastic resin obtained by (co)polymerisation of at least 75 wt % of an alkyl methacrylate, the other comonomers being one or several olefinically unsaturated comonomers, preferably of the alkyl (meth)acrylate type. The esters are formed by the reaction of the acrylic or methacrylic acid with suitable alcohols, for example, methyl alcohol, ethyl alcohol, propyl alcohol, butyl alcohol and 2-ethylhexyl alcohol. Generally, the larger the alcohol portion of the ester, the softer and more flexible the resultant resin. Also, generally, the methacrylic esters form harder films than the corresponding acrylic esters. As examples of such resins, there may be cited polymethylmethacrylate, copolymers of methylmethacrylate with ethyl acrylate, butyl methacrylate, isobutyl methacrylate, acrylic acid or methacrylic acid, and the like. The most preferred PMMA resins are those which exhibit a viscosity of from 7 to 17 P in 40% solution in a 95:5 by weight mixture of toluene and ethylene glycol methyl ether.

When a PMMA resin is used, the weight ratio of PVdF/PMMA may vary widely from 80:20 to 40:60, and preferably from 75:25 to 65:35.

The mixture of PVdF resin, the one or more thermoplastic resins and the one or more pigments may additionally contain a flow promoting agent. Although a flow promoting agent is not essential to the invention, it helps obtaining the high quality of coating surface required in the art. As the flow promoting agent, there are generally used acrylic resins having a relatively low molecular weight (e.g. of about 20,000). The amount of flow promoting agent may vary widely from 0 to 3 wt %, based on the total weight of the mixture, but the amount preferably used is of about 1 wt % based on the total weight of the mixture.

The use of pigments in the coating composition is essential. Indeed, if no pigment is used, a clearcoat or varnish can be obtained; however, the resulting coating is unevenly milky, which is undesirable. Further, such clearcoats have a lesser resistance to high temperature, and most important they insufficiently absorb ultraviolet light which will therefore be able to contribute to the degradation of the primer.

When pigments are used, any pigment or combination of pigments may be used, provided they are resistant to the subsequent heat treatment. The choice of pigments may be made in accordance with what is known in the art for PVdF-based coatings. The amount of pigment used may vary widely, especially according to its hiding power. For example, a white topcoat prepared exclusively with titanium dioxide mazy require about 35 wt % of said pigment. Other pigments with better hiding properties may require lower amounts.

Extruding and granulating the resulting mixture can be made by the usual procedures. The operating procedure is easily determined by one skilled in that art. In particular, there may be used a single or double screw extruder. The processing temperature is usually of from 190°C to 240°C, preferably of about 220°C. The dimensions of the pellets are not critical parameters; they are usually of about 3 mm diameter and 2 mm length.

Cryogenically grinding the pellets may be done by any suitable means which allows suitable particles to be obtained. The powder should comprise particles of size and shape suitable for achieving constant flow through the application equipment, mainly in order to obtain a constant thickness of the coating. It is preferred that the shape of the particles be as spherical as possible, because the resulting powder has better flowing properties. Regarding the size of the particles, the grinding step is usually associated with a sieving step for eliminating the largest size particles, i.e. those particles exceeding about three times the desired thickness of the coating. On the other hand, excessively small particles (i.e. < 1.5 $\mu$m) are to be avoided, because they are a hazard for health and because they tend to block the transport lines during application. According to the invention, it is preferred that the particles of the ground PVdF-based powder have an average particle size of from 0.03 to 0.05 mm.

The grinding step is usually carried out at a temperature equal to or lower than about - 50°C. The compositions containing lower amounts of PVdF should be grinded at lower temperatures, i.e. below about - 60°C. In any case, the pellets are preferably cooled, usually in liquid nitrogen, immediately before grinding.

The Applicant has unexpectedly found that it is preferable to use hammer mills wherein a rotating shaft carries hammers which break the pellets on fixed shapes in the casing of the hammer mill and hammer them through a sieving lining at the bottom of the hammer mill. Sieve openings of about 0.2 mm have been found particularly appropriate.

The resulting powder may be applied on the substrate by any means suitbale for achieving an even distribution of the particles. In particular, any electrostatic spray application apparatus may be used, whereby the charged particles are sprayed onto the oppositely charged substrate. Alternative techniques are cloud chamber, fluidised bed, and even in some cases triboelectric coating, and the like. Such techniques are well known in the art and need not be described further.

The PVdF-based powder may be applied directly onto the substrate, but it may also be applied over a suitable primer coating. In particular, it may be applied over primer coatings based on epoxy-type resins, more particularly on epoxy-phenolic resins, which are known in the art as primers for similar fluorinated polymers. It is also possible to apply the PVdF-based powder over primer coatings based on epoxy-type resins which contain up to 20 wt % of PVdF resin powder.

After the PVdF-based powder coating has been applied to the substrate, it must be subjected to a heat treatment. The coated substrate is passed into an heated oven wherein the coating is finally baked at a temperature of from 180°C to 260°C. The temperature used in this step should be higher than the crystalline melting point of the PVdF-based powder, which melting point is easily determined experimentally. On the other hand, excessively high temperatures have a yellowing effect on the finished coating. The duration of the heating step is determined by any suitable method which is known in the art, taking into account that an insufficient duration is detrimental to the surface hardness.

Finally, the coating and its substrate can be either slowly cooled in air or quenched in water.

In order to further illustrate the invention, the following examples are given.

Example 1

A mixture was prepared from the following components :

46.2 parts by weight (p.b.w.) of a commercially available PVdF resin having a molecular weight of about 45 000, a melt flow index (according to ASTM D 1238) of about 20 g/10 min, and a melt viscosity (according to ASTM D 3835) of about 9 000 P at 230°C;

19.8 p.b.w. of a commercially available thermoplastic methylmethacrylate polymer having a viscosity of about 12 P in 40% solution in a 95:5 by weight mixture of toluene and ethylene glycol methyl ether;

1 p.b.w. of an acrylic polymer, prepared from 30 wt % of ethylacrylate and 70 wt % of 2-ethylhexylacrylate and having a viscosity of about 1.06 Pa.s at 98.9°C, or of about 590 Poises (97.6% solution in xylene); and

33 p.b.w. of a white $TiO_2$ pigment, commercially available as Titanium white KRONOS-2160. Prepared according to the chlorine process,. it has a density of 3.9 g/cm$^3$; it contains 90% $TiO_2$, and it is surface-treated with alumina and silica compounds to increase its weathering resistance. KRONOS is a registered Trade Mark of KRONOS TITAN.

The resulting mixture was extruded under the following conditions, giving pellets of 3 mm diameter and about 2 mm length :

- twin screw extruder
- screw rotation : 200 rpm
- load : 85%
- temperature profile : 170°C at hopper exit, rising to 220°C in the middle of the screw, then down to 190°C up to the end of the screw
- temperature of the material at the exit : 195°C.

The pellets were cooled in liquid nitrogen down to at least - 150°C, then grinded at a temperature not higher than about - 50°C in a hammer mill and sieved to eliminate particles larger than about 150 μm. In the hammer mill, a rotating shaft carries hammers which break the pellets on fixed shapes in the casing of the hammer mill and hammer them through a sieving lining at the bottom of the hammer mill. The particle size distribution was measured : 99% of the particles had a size below 90 μm, and 40% below 32 μm. Only 5% had a size below 15 μm.

The resulting powder was applied by an electrostatic spray process on a 2 mm thick chromated aluminium plate previously covered by a 5 μm layer of an epoxy primer. The epoxy primer had the following composition :

20 p.b.w. of commerically available epoxy resin having a molecular weight of about 6750 and an epoxy equivalent of about 3200

50 p.b.w. of solvents,

20 p.b.w. of pigment and extenders,

2 p.b.w. of thixotropic agent,

2 p.b.w. of hardener, and

0.1 p.b.w. of catalyst.

The coated substrate was then heated 9 minutes at 240°C (object temperature), giving a 50 μm PVdF-based top coating.

The properties of the coating were determined :

| Erichsen | 7 mm | according to ISO-1520, DIN-53156 or ECCA-T6 |
|---|---|---|
| Direct impact resistance | 100 kg.cm | ) according to ECCA-T5 or ASTM-D 2794 |
| Reverse impact resistance | 50 kg.cm | |
| Buchholz hardness | 90 | according to 1SO-2815 or DIN 53153 (= ECCA-T12) |
| Adherence | GTO | according to ISO-2409 |
| Solvent resistance | > 100 rubs | using methyl ethyl ketone (MEK) as solvent |
| Humidity cabinet | > 2000 h | according to ASTM-D2247-68 (at 40°C and 100% humidity, no delamination observed) |
| Q-UV test | | according to ECCA-T10 |
| | 100% | gloss retention after 2000 h. |
| | 80% | gloss retention after 4000 h. |

## Comparative example A

A PVdF-based composition containing solvents was prepared by mixing the following ingredients :

20   p.b.w. of a commercially available highly crystalline, high molecular weight PVdF resin, having a molecular weight of about 350 000 and a melt viscosity (according to ASTM D 3835) of about 31 000 P

20   p.b.w. of thermoplastic PMMA (as described in Example 1)

10   p.b.w. of dimethylphthalate

20   p.b.w. of $TiO_2$ pigment

3   p.b.w. of additives (levelling agent; flow improver,...)

30   p.b.w. of solvent (isophorone, ethylglycol acetate, butylglycol)

The resulting solution was sprayed on a 2 mm thick chromated aluminium plate previously covered by a 5 $\mu$m layer of an epoxy primer. The coated substrate was then heated 1 minute at 245°C, giving a 30 $\mu$m PVdF-based top coating.

The following properties were determined as in Example 1 :

| Erichsen | 6mm |
|---|---|
| Reverse impact resistance | 150 kg.cm |
| Buchholz hardness | 100 |
| Adherence | GTO |
| Solvent resistance | > 100 rubs |
| Humidity cabinet | > 2000 h without delamination |
| Q-UV test | 85% gloss retention after 2000 h |

This example shows that the PVdF-based compositions containing solvents, which create environmental and other problems due to the evaporation of the solvents, have no significantly better properties than the PVdF-based powder coatings of the invention.

Comparative example B

The pellets in Example 1 were cryogenically grinded in a laboratory scale needle mill (ALPINE, type 100 1U). The particle size distribution was as follows : 34% below or equal to 32 $\mu$m; 16% equal to or above 90 $\mu$m. No satisfactory coating was obtained using this powder.

Although the Applicant does not wish to be bound by any theory, it is possible that this milling procedure gives inappropriate particle shapes, as sieving the particles does not appear to significantly improve the resulting coatings.

Comparative example C

A polyester powder coating was prepared according to the procedure described in British Patent Specification n° 1,529,422, more specifically according to Example 1 thereof.

The following properties were determined as in Example 1 of the present invention :

| Erichsen | 8.5 mm |
|---|---|
| Direct impact resistance | 200 kg.cm |
| Reverse impact resistance | 50 kg.cm |
| Buchholz hardness | 90 |
| Adherence | GTO |
| Solvent resistance | 3 rubs |
| Humidity cabinet | > 1000 h without delamination |
| Q-UV test | 40% gloss retention after 500 h |

This comparative example confirms that polyester powder coatings have an insufficient resistance to weathering, as evidenced by the results of the Q-UV test.

Example 2

The same powder as obtained in Example 1 was electrostatically sprayed directly onto a 2 mm thick thermic galvanized steel plate previously covered by a 5 $\mu$m layer of an epoxy primer as desribed in Example 1. The coated substrate was heated 9 minutes at 240°C, whereby a 50 $\mu$m PVdF-based top coating was obtained.

The properties determined were similar to those determined in Example 1.

Examples 3-8 and comparative example D

PVdF-based coatings were prepared, as in Examples 1 and 2 and using the same PVdF, PMMA and flow improver, from different mixture compositions as mentioned in the following Table (all pigment names are Trade Names). However, in Examples 6 and 8, the flow improver was a commercial powder form aid, available as Modaflow Powder III (Modaflow is a registered Trade Name).

TABLE
-----

(all values in p.b.w.)

| | Ex.3 | Ex.4 | Ex.5 | Ex.6 | Ex.7 | Ex.8 | Comp. Ex.D |
|---|---|---|---|---|---|---|---|
| colour | white | brown | brown | beige | grey | brown | brown |
| PVdF | 44.8 | 63.3 | 44.5 | 53.8 | 55.9 | 58.1 | 26.7 |
| PMMA | 19.2 | 26.7 | 44.5 | 23.1 | 24.0 | 24.9 | 62.3 |
| flow improver | 1.0 | 1.0 | 1.0 | 1.0 | 1.0 | 1.0 | 1.0 |
| TiO$_2$ Kronos 2160 | 35.0 | 0.45 | 0.45 | 20.2 | 16.4 | | 0.45 |
| Yellow AC 5047 | | 3.65 | 3.65 | | | 3.45 | 3.65 |
| Red 180 | | 4.90 | 4.90 | | | | 4.90 |
| Flammrus 101 | | 1.00 | 1.00 | 0.01 | 0.13 | 0.6 | 1.00 |
| Sicotans Yellow L 2110 | | | | 1.83 | 2.67 | | |
| Monastral Green | | | | | 0.002 | | |
| Lankowax TF 1778 | | | | | | 1.0 | |
| Plastorit | | | | | | 10.0 | |
| Bayferrox 130 BM | | | | | | 0.92 | |

## Properties

| | Ex.3 | Ex.4 | Ex.5 | Ex.6 | Ex.7 | Ex.8 | Comp. Ex.D |
|---|---|---|---|---|---|---|---|
| Erichsen (mm) | 6.7 | > 8 | > 8 | > 8 | > 8 | > 8 | > 8 |
| Conical mandrel | 22 | 0 | 69 | 10 | 0 | 10 | 69 |
| Impact | 100 | 100 | 40 | 100 | 100 | 100 | 6 |
| QUV test (1500 h) | 100% | 100% | 100% | 100% | 100% | 100% | 92% |
| Buchholz hardness | 97 | 102 | 79 | 98 | 93 | 97 | 75 |

The composition of Comparative Example D contains an insufficient amount of PVdF and gives coatings which do not have a sufficient resistance to weathering.

Examples 9 and 10

Two identical lots of pellets, prepared according to Example 1, were grinded in the same hammer mill according to the procedure described in Example 1. However, the sieve had openings of 0.5 mm (Example 9) and 0.3 mm (Example 10). The particle size distribution was as follows :

| | | Ex.9 | Ex.10 |
|---|---|---|---|
| | < 50 µm | 39 % | 67 % |
| > 50 µm | < 100 µm | 45.5 % | 29.5 % |
| > 100 µm | < 150 µm | 12.5 % | 2.0 % |
| > 150 µm | | 3.0 % | 1.5 % |

The coatings (produced according to Example 1) were smoother when using the powder of Example 10.

## Claims

1. Process for preparing pigmented PVdF-based powder coating products, comprising the steps of :
   (i) mixing PVdF resin with one or more compatible thermoplastic resins and one or more pigments;
   (ii) extruding and granulating the resulting mixture; and
   (iii) cryogenically grinding the pellets, and sieving out particles.

2. Process according to claim 1, wherein the PVdF resin has a molecular weight of from 10 000 to 70 000.

3. Process according to Claim 2, wherein the PVdF resin has a molecular weight of from 30,000 to 50,000.

**4.** Process according to anyone of Claims 1, 2 or 3, wherein the one or more compatible thermoplastic resins comprise a thermoplastic poly(methylmethacrylate) (PMMA) resin.

**5.** Process according to Claim 4, wherein the thermoplastic PMMA resin exhibits a viscosity of from 7 to 17 P in 40% solution in a 95:5 mixture by weight of toluene and ethylene glycol methyl ether.

**6.** Process according to any one of the preceeding Claims, wherein the weight ratio of PVdF/MMA is of from 80:20 to 40:60.

**7.** Process according to Claim 6, wherein the weight ratio of PVdF/PMMA is from 75:25 to 65:35.

**8.** Process according to any one of the preceeding Claims, wherein in the mixing step (i) the PVdF resin is also mixed with up to 3 wt % of a flow promoting agent based on the total weight of the mixture.

**9.** Process according to Claim 8, wherein the PVdF resin is mixed with 1 wt % of the flow promoting agent based on the total weight of the mixture.

**10.** Process according to any one of the preceeding Claims, wherein in the grinding step (iii) the pellets are cryogenically ground in a hammer mill wherein a rotating shaft carries hammers which break the pellets on fixed shapes in a casing of the hammer mill and hammer them through a sieving lining at the bottom of the hammer mill.

**11.** Process according to Claim 10, wherein the sieving lining has sieve openings of about 0.2 mm.

**12.** Process for coating a substrate with a pigmented PVdF-based coating, comprising the steps of :
(a) applying on the substrate a powder which has been prepared by the process according to any one of Claims 1 to 11; and
(b) subjecting the applied powder to a heat treatment.

**13.** Process according to Claim 12, wherein the substrate has been previously covered with a primer coating.

**14.** Process according to either of Claims 12 or 13, wherein the heat treatment is carried out at a temperature of from 180 to 260°C.

**Revendications**

**1.** Procédé pour la préparation de produits pulvérulents de revêtement à base de PVdF pigmenté, comprenant les étapes consistant à :
(i) mélanger de la résine de PVdF avec une ou plusieurs résines thermoplastiques compatibles et un ou plusieurs pigments;
(ii) extruder et granuler le mélange résultant; et
(iii) broyer par voie cryogénique les pastilles et éliminer des particules par tamisage.

**2.** Procédé selon la revendication 1, dans lequel la résine de PVdF a un poids moléculaire de 10.000 à 70.000.

**3.** Procédé selon la revendication 2, dans lequel la résine de PVdF a un poids moléculaire de 30.000 à 50.000.

**4.** Procédé selon l'une quelconque des revendications 1, 2 ou 3, dans lequel la ou les résines thermoplastiques compatibles comprennent une résine thermoplastique de poly(méthacrylate de méthyle) (PMMA).

**5.** Procédé selon la revendication 4, dans lequel la résine thermoplastique de PMMA manifeste une viscosité de 7 à 17 P dans une solution à 40% dans un mélange 95:5 en poids de toluène et d'éther méthylique d'éthylèneglycol.

**6.** Procédé selon l'une quelconque des revendications précédentes, dans lequel le rapport pondéral PVdF/PMMA est de 80:20 à 40:60.

**7.** Procédé selon la revendication 6, dans lequel le rapport pondéral PVdF/PMMA est de 75:25 à 65:35.

**8.** Procédé selon l'une quelconque des revendications précédentes, dans lequel, au cours de l'étape de mélange (i), on mélange également la résine de PVdF avec jusqu'à 3% en poids d'un agent favorisant l'écoulement, basés sur le poids total du mélange.

**9.** Procédé selon la revendication 8, dans lequel on mélange la résine de PVdF avec 1% en poids de l'agent favorisant l'écoulement, basé sur le poids total du mélange.

**10.** Procédé selon l'une quelconque des revendications précédentes, dans lequel, au cours de l'étape de broyage (iii), on broie par voie cryogénique les pastilles dans un broyeur à marteaux dans lequel un arbre rotatif supporte des marteaux qui broient les pastilles en formes fixes dans un logement du broyeur à marteaux et qui les font passer à coups de marteaux à travers une garniture de tamisage disposée au fond du broyeur à marteaux.

**11.** Procédé selon la revendication 10, dans lequel la garniture de tamisage possède des ouvertures de tamis d'environ 0,2 mm.

**12.** Procédé destiné à enduire un substrat à l'aide d'un revêtement à base de PVdF pigmenté, comprenant les étapes consistant à :
(a) appliquer sur le substrat une poudre qui a été préparée par le procédé selon l'une quelconque des revendications 1 à 11; et
(b) soumettre la poudre appliquée, à un traitement thermique.

**13.** Procédé selon la revendication 12, dans lequel le substrat a été préalablement recouvert à l'aide d'une couche de fond.

**14.** Procédé selon l'une quelconque des revendications 12 ou 13, dans lequel on effectue le traitement thermique à une température de 180 à 260°C.

**Patentansprüche**

**1.** Verfahren zur Herstellung von pigmentierten Pulverbeschichtungsprodukten auf PVdF-Basis, mit den Schritten:
(i) Vermischen von PVdF-Harz mit einem oder mehreren kompatiblen thermoplastischen Harzen und einem oder mehreren Pigmenten;
(ii) Extrudieren und Granulieren der erhaltenen Mischung; und
(iii) kryogenes Mahlen der Pellets und Sieben der Teilchen.

**2.** Verfahren nach Anspruch 1, worin das PVdF-Harz ein Molekulargewicht von 10 000 bis 70 000 aufweist.

**3.** Verfahren nach Anspruch 2, worin das PVdF-Harz ein Molekulargewicht von 30 000 bis 50 000 aufweist.

**4.** Verfahren nach irgendeinem der Ansprüche 1, 2 oder 3, worin das eine oder die mehreren kompatiblen thermoplastischen Harze ein thermoplastisches Poly(methylmethacrylat)harz (PMMA) umfassen.

**5.** Verfahren nach Anspruch 4, worin das thermoplastische PMMA-Harz eine Viskosität von 7 bis 17 P in einer 40 %igen Lösung in einer 95:5 Gewichtsmischung aus Toluol und Ethylenglycolmethylether aufweist.

**6.** Verfahren nach irgendeinem der vorausgehenden Ansprüche, worin das Gewichtsverhältnis von PVdF/PMMA von 80:20 bis 40:60 beträgt.

7. Verfahren nach Anspruch 6, worin das Gewichtsverhältnis von PVdF/PMMA von 75:25 bis 65:35 beträgt.

8. Verfahren nach irgendeinem der vorausgehenden Ansprüche, bei dem in der Mischstufe (i) das PVdF-Harz außerdem mit bis zu 3 Gew.-%, bezogen auf das Gesamtgewicht der Mischung, eines Fließhilfsmittels vermischt wird.

9. Verfahren nach Anspruch 8, worin das PVdF-Harz mit 1 Gew.-%, bezogen auf das Gesamtgewicht der Mischung, des Fließhilfsmittels vermischt wird.

10. Verfahren nach irgendeinem der vorausgehenden Ansprüche, bei dem in der Mahlstufe (iii) die Pellets in einer Hammermühle kryogengemahlen werden, in der eine rotierende Welle Hämmer aufweist, die die Pellets an feststehenden Formen in einem Gehäuse der Hammermühle aufbrechen und diese durch eine Siebauskleidung am Boden der Hammermühle hindurchhämmern.

11. Verfahren nach Anspruch 10, worin die Siebauskleidung Sieböffnungen von etwa 0,2 mm aufweist.

12. Verfahren zum Beschichten eines Substrats mit einer pigmentierten Beschichtung auf PVdF-Basis, mit den Schritten:
   (a) Aufbringen eines Pulvers, das nach dem Verfahren nach einem der Ansprüche 1 bis 11 erhalten wurde, auf ein Substrat; und
   (b) Wärmebehandeln des aufgebrachten Pulvers.

13. Verfahren nach Anspruch 12, bei dem das Substrat vorher mit einer Grundierungsbeschichtung überzogen wurde.

14. Verfahren nach Anspruch 12 oder 13, bei dem die Wärmebehandlung bei einer Temperatur von 180 bis 260°C durchgeführt wird.